Europäisches Patentamt

**European Patent Office**

**Office européen des brevets**

(11) Numéro de publication: **0 025 737**
**B1**

(12)                    **FASCICULE DE BREVET EUROPEEN**

(45) Date de publication du fascicule du brevet: **22.02.84**

(51) Int. Cl.³: **B 25 H  1/04,** B 23 Q  1/16,
B 27 C  9/00

(21) Numéro de dépôt: **80401230.0**

(22) Date de dépôt: **28.08.80**

(54)   **Machine-outil transportable.**

(30) Priorité: **17.09.79 FR  7923092**

(43) Date de publication de la demande:
**25.03.81 Bulletin 81/12**

(45) Mention de la délivrance du brevet:
**22.02.84 Bulletin 84/8**

(84) Etats contractants désignés:
**BE DE GB IT LU NL**

(56) Documents cités:
**DE - A - 1 910 977
DE - B - 1 111 118
DE - B - 2 617 800
DE - B - 2 717 188
DE - C -  125 414
FR - A - 1 411 113
FR - A - 2 398 582
US - A - 4 073 484**

(73) Titulaire: **Peugeot Outillage Electrique, Société
dite:
66/78 avenue François Arago
F-92000 Nanterre (FR)**

(72) Inventeur: **Maret, Jean-Claude
3  Impasse Charrière
F-75011 Paris (FR)**

(74) Mandataire: **Polus, Camille et al,
c/o Cabinet Lavoix 2, Place d'Estienne d'Orves
F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Machine-outil transportable.

La présente invention concerne les machines-outils transportables.

Les amateurs du bricolage s'équipent d'outillages de plus en plus complets et perfectionnés et notamment de machines telles que perceuses, toupies, raboteuses, scies ou analogues.

Parmi les équipements existants, on peut citer une table ou un bâti équipé d'un moteur électrique et sur lequel peuvent être fixés au choix divers outillages conçus pour être accouplés au moteur.

Un tel équipement est encombrant et présente des difficultés de rangement.

En outre, il ne peut être aisément transporté par une seule personne.

On a donc eu l'idée de revenir aux machines dites intégrales, qui comportent un moteur d'entraînement associé de façon définitive à un outillage donné.

Une telle conception permet d'alléger considérablement l'outillage, mais, étant donné qu'à chaque outil doit être associée une table ou un bâti, l'encombrement de l'ensemble reste important.

Dans le FR—A—1.551.328, on décrit une machine-outil du premier type mentionné ci-dessus, cette machine étant associée à un piétement qui lorsque la machine n'ést pas utilisée ou doit être transportée, constitue autour d'elle une sorte de coffre l'enfermant sur toutes les faces. Ce piétement repliable est lourd et encombrant et la machine ne peut pas être transportée facilement par une seule personne.

L'invention vise à créer une machine intégrale qui présente à la fois un poids et un encombrement tels qu'elle puisse être aisément mise en place, rangée et transportée.

Elle a donc pour objet une machine, notamment une machine-outil comportant un bâti formant plan de travail, contenant un moteur électrique d'entraînement et une unité d'usinage associée audit moteur et un piétement repliable, caractérisée en ce que le piétement est constitué de deux pieds repliables, en forme d'anses aplaties articulés chacun par leurs extrémités sur deux extrémités opposées du bâti, la portion aplatie de chaque pied formant une zone d'appui sur le sol, les dimensions et les formes desdites anses étant telles que d'une part le bâti puisse y passer lors des déplacements angulaires relatifs du bâti et des pieds et d'autre part les pieds puissent passer l'un dans l'autre au cours desdits déplacements, ledit piétement comportant en outre des moyens d'immobilisation des pieds en position déployée.

D'autres caractéristiques de l'invention apparaîtront au cours de la description qui va suivre, faite en référence aux dessins annexés, donnés uniquement à titre d'exemple et sur lesquels:

— la Fig. 1 est une vue en perspective d'une machine-outil suivant l'invention, représentée en position de travail déployée;

— la Fig. 2 est une vue de dessus de la machine-outil de la Fig. 1;

— les Fig. 3a à 3e montrent les diverses phases du mouvement nécessaire pour faire passer la machine suivant l'invention de sa position de travail représentée à la Fig. 3a à sa position repliée représentée à la Fig. 3e;

— les Fig. 4, 5 et 6 sont des vues partielles de machine suivant l'invention montrant des variantes de moyens d'immobilisation du piétement; et

— la Fig. 7 est une vue partielle en coupe, à plus grande échelle d'un autre mode de réalisation des moyens de verrouillage pour les pieds de la machine suivant l'invention.

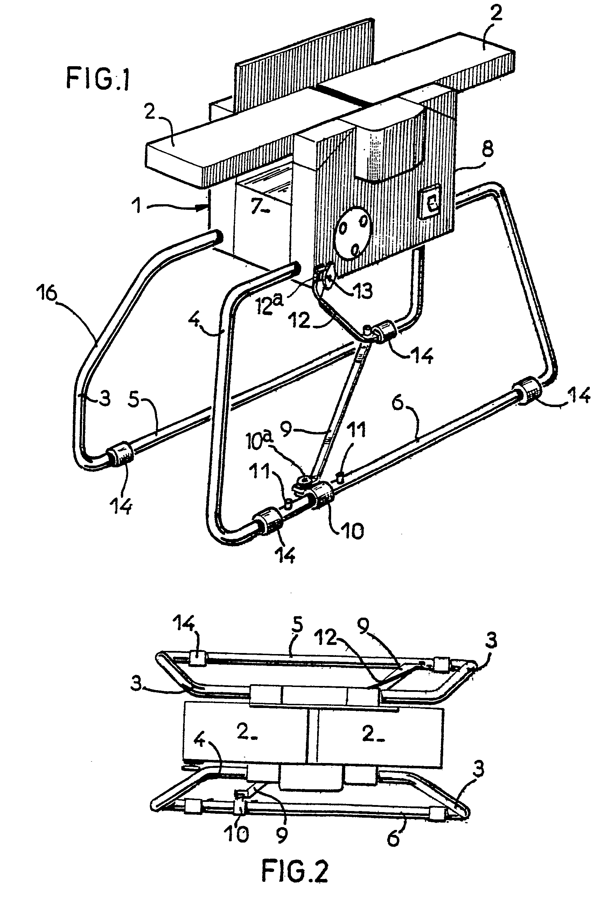

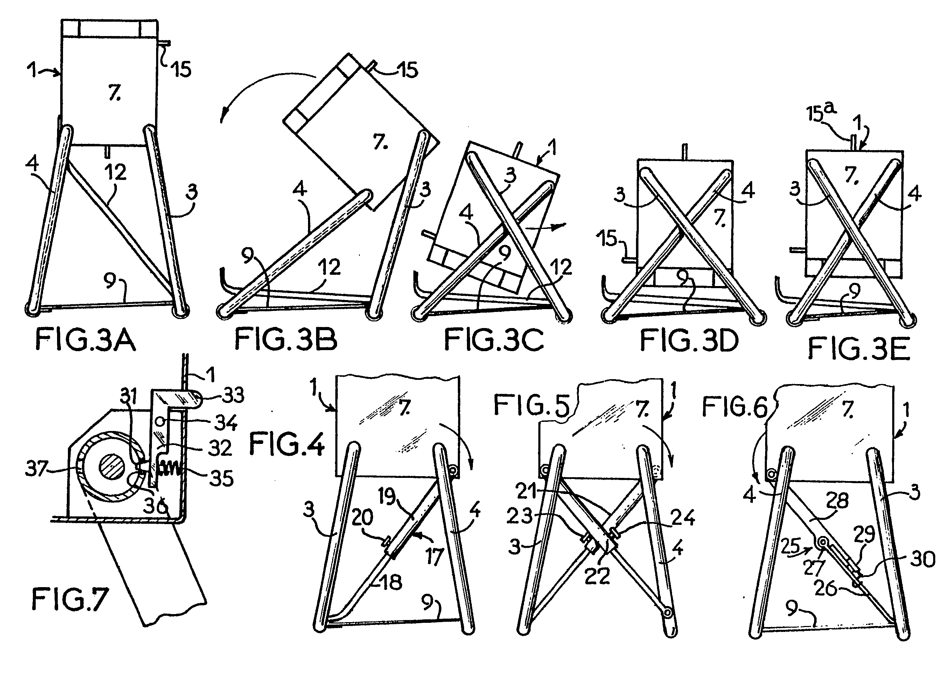

En se référant tout d'abord à la Fig. 1, l'invention y est représentée comme étant appliquée à une raboteuse-dégauchisseuse dont le corps 1 contenant un moteur électrique d'entraînement et le mécanisme de la machine, non représenté, présente une forme parallélépipédique, et comporte à sa partie supérieure deux plaques allongées 2 qui constituent le plan de travail de la dégauchisseuse.

A proximité de la face du bloc, 1 opposée aux plaques 2, sont articulés deux pieds 3 et 4 en forme d'anses présentant des portions aplaties respectives 5 et 6 qui servent de zones d'appui au sol pour la machine. Chacun des pieds 3 et 4 est articulé par ses extrémités sur deux faces opposées 7, 8 du block 1. A cet effet, des orifices destinés à recevoir les extrémités des pieds 3 et 4 sont ménagées dans les faces 7 et 8 du corps 1.

Les pieds sont avantageusement réalisés à partir de tronçons de tube convenablement pliés.

Les pieds 3 et 4 sont reliés entre eux par des moyens d'imobilisation qui dans le mode de réalisation de la Fig. 1, comprennent une traverse diagonale 9 articulée sur une extrémité de la portion rectiligne 5 du pied 3 est reliée à l'extrémité opposée de la portion rectiligne 6 du pied 4 par l'intermédiaire d'un manchon 10 monté à coulissement sur la partie rectiligne 6 entre deux ergots 11 constituant des butées en translation pour le manchon 10. Le manchon 10 peut être immobilisé sur la partie rectiligne 6 au moyen d'une vis à tête de manoeuvre 10a. Sur l'extrémité de la traverse 9 articulée sur la portion rectiligne 5 du pied 3 est en outre articulée une jambe de renforcement 12 dont l'extrémité opposée est fixée sur la face latérale du corps 1 voisine du point d'articulation du pied 4 sur ledit corps le plus éloigné de l'articulation de la jambe 12 sur la partie rectiligne 5 du pied 3. Dans le mode de réalisation de la Fig. 1, la jambe 12 est fixée au corps 1 au moyen d'une vis 13 à tête de manoeuvre engagée dans une fourche 12a de la jambe. L'ensemble constitué par les deux pieds 3, 4, la traverse 9 et la jambe de renforcement 12 constituent le piétement de la machine suivant l'invention. Les dimensions des pieds 3, 4 en forme d'anses sont choisies d'une part de façon à présenter des portions rectilignes 5, 6 suffisamment longues pour assurer une bonne stabilité de la machine sur le sol et d'autre part, de façon que lors des déplacements angulaires du corps 1 par rapport au pied 3, 4 en vue de replier le piétement, le corps 1 puisse passer dans les anses constituées par lesdits pieds.

Le piétement est enfin complété par quatre patins formés par des manchons 14 disposés aux extrémités des portions rectilignes 5 et 6 des pieds 3 et 4 et destinés à assurer une meilleure adhérence de la machine sur le sol.

A la Fig. 3a on a représenté la machine suivant l'invention en position déployée et on va maintenant décrire la manière de replier son piétement.

Afin de faciliter la manipulation, la machine comporte sur une des ses faces larérales, une poignée 15. Afin de replier le piétement, on commence par libérer la jambe de renforcement 12 à son extrémité fixée au corps 1 en desserrant la vis 13. Puis, en maintenant le bloc 1 par la poignée 15, on lui fait subir un basculement dans le sens de la flèche représentée à la Fig. 3b autour de ses articulations sur le pied 3. On constate à cette occasion que le poids du corps 1 est en grande partie supporté par le pied 3, ce qui facilite considérablement la tâche de l'opérateur. Le mouvement de basculement est continué de manière à faire atteindre au bloc 1 la position représentée à la Fig. 3c. On voit que dans cette position, le poids commence à se répartir à nouveau sur les deux pieds 3 et 4. Par ailleurs, on constate que le pied 4 est venu croiser le pied 3 par l'intérieur de celui-ci. Ceci est permis grâce à la présence sur le pied 3, ainsi qu'on peut le voir à la Fig. 1 de portions latérales obliques 16 qui permettent le passage du pied 4 à l'intérieur de l'anse constituée par le pied 3.

Le mouvement est ensuite poursuivi jusqu'à ce que le corps 1 atteigne sa position représentée à la Fig. 3d dans laquelle son poids est également réparti sur les deux pieds 3 et 4.

Il reste alors à rapprocher l'une de l'autre les portions rectilignes 5 et 6 des pieds 3 et 4 par desserage et coulissement du manchon 10 de façon que l'écartement des pieds soit à peu près égal à l'encombrement en largeur du corps 1 comme ceci est représenté à la Fig. 3e et à immobiliser à nouveau le manchon par la vis 10a de façon à maintenir les pieds 3 et 4 en position rapprochée.

La machine peut être alors transportée en utilisant une poignée 15a prévue sur sa face opposée au plan de travail.

Dans le mode de réalisation représenté à la Fig. 4, la jambe de renforcement 12 est remplacée par une jambe de renforcement 17 coulissante qui comporte une portion 18 constituée par une tige pleine articulée à l'une de ses extrémités sur la portion rectiligne 5 du pied 3, au niveau de l'articulation de la traverse diagonale 9 et pénètrant par son extrémité opposée dans une portion tubulaire 19, elle-même articulée sur une des faces 7 sur laquelle sont articulées les extrémités des pieds 3 et 4.

L'immobilisation relative des éléments 18 et 19 de la jambe 17 est assurée par une vis 20, un ergot ou autre.

Dans le mode de réalisation représenté à la Fig. 5, les moyens d'immobilisation des pieds 3 et 4 sont constitués par deux jambes télescopiques 21, 22 analogues à la jambe 17 de la Fig. 4, articulées respectivement entre une extrémité d'une portion rectiligne 5, 6 d'un pied 3, 4 et une face 7, 8 du corps 1 sur laquelle sont prévues les articulations des pieds 3 et 4. Des vis 23 et 24 assurent respectivement l'immobilisation des jambes 21 et 22.

Bien entendu, celles-ci pourraient être remplacées par des jambes en une seule pièce articulée de la même manière sur le corps 1 et les pieds 3 et 4, ou par des vérins. Les vérins exercent un effort que facilite l'opération de déploiement de la machine.

On peut avantageusement utiliser des vérins tels que des ressorts hydro-pneumatiques de marque STABILUS, vendus sous la désignation Lift-O-Mat, type standard, référence 03—08—250—111. On peut également utiliser des vérins de marque BOGE.

Dans le mode de réalisation représenté à la Fig. 6, on retrouve une traverse 9 analogue à celle de la Fig. 1, mais la jambe de renforcement est ici constituée par un compas 25 formé d'une tige pleine 26 articulée en un point 27 sur une biellette 28 dont une extrémité 29 forme butée angulaire pour la tige 26. L'autre extrémité de la biellette 28 est articulée sur l'une des faces telle que 7 du corps 1, tandis que l'extrémité de la tige 26 opposée à l'articulation 27 est reliée à la portion rectiligne du pied 3 de la manière déjà décrite en référence à la Fig. 1. A l'extrémité 29 de la biellette 28 est prévu un organe de verrouillage 30 destiné à empêcher le repliage accidental du compas.

Enfin, à la Fig. 7 on a représenté des moyens d'immobilisation des pieds au niveau de leurs articulations dans le corps 1 de la machine. Ces moyens comprennent un ergot 31 porté par un levier 32 dont une extrémité 33 fait saillie hors du corps 1 afin de permettre son actionnement. Ce levier 32 est articulé sur le corps 1 au moyen d'un axe 34 et taré par un ressort 35.

L'ergot 31 destiné à pénétrer dans des orifices 36 et 37 ménagées dans l'extrémité correspondante de chaque pied qui pénétre dans le corps 1, les positions des orifices 36, 37 correspondant aux positions angulaires que doit occuper chaque pied respectivement en position dépliée et repliée du piétement.

Bien entendu, avec des moyens d'immobilisation tels que ceux représentés à la Fig. 7 associés à chacune des articulations des pieds 3 et 4 sur le corps 1, les jambes de renforcement deviennent inutiles et si les pieds présentent par eux mêmes une rigidité suffisante, on peut également éviter l'emploi d'une traverse d'entretoisement telle que la traverse 9 des modes de réalisation des Fig. 1, 4 et 6.

Le piétement qui vient d'être décrit est applicable à des machines intégrales de différents types. Il suffit que l'encombrement du bloc, de la machine soit tel que le bloc puisse passer dans les anses constituées par les pieds formant le piétement pour permettre les opérations de déploiement et de repliage.

L'agencement qui vient d'être décrit permet d'obtenir des machines intégrales qui présentent un faible encombrement lorsqu'elles sont repliées et qui sont de ce fait aisément transportables.

Par ailleurs, du fait que lors des opérations de déploiement ou de repliage, la majeure partie du poids du corps de la machine est supportée par l'un au moins des pieds formant le piétement, la manipulation de la machine est considérablement facilitée.

## Revendications

1. Machine, notamment machine-outil comportant un bâti formant plan de travail, contenant un moteur électrique d'entraînement et une unité d'usinage associée audit moteur et un piétement repliable, caractérisé en ce que le piétement est constitué de deux pieds (3, 4) repliables, en forme d'anses aplaties, articulés chacun par leurs extrémités sur deux extrémités (7, 8) du bâti (1), la portion aplatie (5, 6) de chaque pied formant une zone d'appui sur le sol, les dimensions et les formes desdites anses étant telles que d'une part le bâti (1) puisse y passer lors des déplacements angulaires relatifs du bâti (1) et des pieds (3, 4) et que d'autre part les pieds puissent passer l'un dans l'autre au cours desdits déplacements, ledit piétement comportant en outre des moyens (9, 12; 9, 17; 21, 22; 9, 25, 30; 32) d'immobilisation des pieds en position déployée.

2. Machine suivant la revendication 1, caractérisée en ce que le bâti (1) ayant une forme parallélépipédique, lesdits pieds (3, 4) sont articulés sur deux faces latérales opposées (7, 8) dudit corps, les extrémités desdits pieds étant engagées dans des orifices correspondants ménagés dans lesdites faces.

3. Machine suivant l'une quelconque des revendications 1 et 2, caractérisée en ce que lesdits moyens d'immobilisation des pieds (3, 4) comprennent une traverse diagonale (9) articulée par chacune de ses extrémités à une extrémité d'une portion aplatie rectiligne (5, 6) de chaque pied (3, 4) et une jambe de renforcement (12; 17; 28) reliant l'un des pieds (3, 4) à un point du corps (1) de la machine se trouvant sur une face dudit corps opposée audit pied (3, 4).

4. Machine suivant la revendication 3, caractérisée en ce que ladite traverse diagonale est articulée sur la portion rectiligne (6) de l'un des pieds (4) au moyen d'un manchon (10) monté à coulissement sur ladite portion rectiligne entre deux butées (11), ledit manchon étant pourvu de moyens (10a) d'immobilisation en translation.

5. Machine suivant l'une quelconque des revendications 1 et 2, caractérisée en ce que lesdits moyens d'immobilisation des pieds (3, 4) comprennent deux jambes de renforcement (21, 22) dont les extrémités sont respectivement articulées sur un pied (3, 4) et une face (7, 8) du corps (1) de la machine.

6. Machine suivant l'une quelconque des revendications 3 à 5, caractérisée en ce que la ou les jambes de renforcement sont constituées soit par des tiges (12) en une seule pièce, pourvues de moyens de fixation libérables (13) à l'une de leur extrémités, soit par des jambes télescopiques (17; 21, 22), soit par des compas (25) pourvus de moyens de blocage en rotation d'une branche (26) par rapport à l'autre (28) au-delà de l'alignement desdites branches.

7. Machine suivant la revendication 6, dans laquelle les jambes de renforcement sont constituées par des jambes télescopiques, caractérisée en ce que ces jambes télescopiques sont des vérins.

8. Machine suivant la revendication 6, dans laquelle les jambes de renforcement sont des jambes téléscopiques caractérisée en ce que lesdites jambes sont pourvues de moyens de blocage (20; 23, 24) en position déployée.

9. Machine suivant la revendication 6, dans laquelle la ou les jambes de renforcement sont constituées par des compas, caractérisée en ce qu'il est en outre prévu un organe de verrouillage (30) destiné à empêcher le repliage accidentel du compas.

10. Machine suivant l'une quelconque des revendications 1 et 2, caractérisé en ce que lesdits moyens d'immobilisation des pieds (3, 4) comprennent au niveau d'au moins une articulation de chaque pied (3, 4) sur le corps (1) de la machine, un ergot (31) porté par un levier d'actionnement (32) articulé sur le corps (1), ledit ergot étant destiné à coopérer avec des orifices (36, 37) ménagés dans l'extrémité correspondante de chaque pied (3, 4) qui pénètre dans le corps, les positions desdits orifices (36, 37) correspondant aux positions angulaires que doit occuper chaque pied respectivement en position dépliée et repliée du piétement.

## Patentansprüche

1. Maschine, insbesondere Werkzeugmaschine mit einem die Arbeitsfläche bildenden Rahmen, welche einen elektrischen Antriebsmotor und eine dem Motor zugeordnete Bearbeitungseinheit und ein zusammenklappbares Gestell enthält, dadurch gekennzeichnet, daß das Gestell durch zwei zusammenklappbare Füße (3, 4) in Form abgeflachter Bügel gebildet ist, die jeweils an ihren Enden an zwei Enden (7, 8) des Rahmens (1) angelenkt sind, wobei der abgeflachte Teil (5, 6) eines jeden Bügels einen Anlagebereich am Boden bildet und wobei die Abmessungen und Formen der Bügel derart sind, daß einerseits der Rahmen (1) sie bei einer relativen Winkelbewegung von Rahmen (1) und Füßen (3, 4) durchdringen kann und daß andererseits die Füße einander bei dieser Bewegung durchdringen können, wobei das Gestell ferner Mittel (9, 12; 9, 17; 21, 22; 9, 25, 30; 32) zur Feststellung der Füße in ausgebreiteter Stellung aufweist.

2. Maschine nach Anspruch 1, dadurch gekennzeichnet, daß der Rahmen (1) eine parallelepipedische Form hat, die Füße (3, 4) an zwei gegenüberliegenden seitlichen Seiten (7, 8) des Körpers angelenkt sind und die Enden der Füße in zugehörige Öffnungen eingesetzt sind, die in diesen Seiten eingelassen sind.

3. Maschine nach irgendeinem der Ansprüche 1 bis 2, dadurch gekennzeichnet, daß die Feststellungsmittel für die Füße (3, 4) eine Diagonalstrebe (9), die mit jedem ihrer Enden an einem Ende eines geradlinigen abgeflachten Teils (5, 6) eines jeden Fußes (3, 4) angelenkt ist, und ein Versteifungsbein (12; 17; 28), welches einen der Füße (3, 4) mit einem Punkt des Körpers (1) der Maschine verbindet, der auf einer dem Fuß (3, 4) gegenüberliegenden Seite des Körpers liegt, aufweist.

4. Maschine nach Anspruch 3, dadurch gekennzeichnet, daß die Diagonalstrebe am geradlinigen Teil (6) des einen der Füße (4) mittels einer Muffe (10) angelenkt ist, die auf dem geradlinigen Teil zwischen zwei Anschlägen (11) gleitend angebracht ist, wobei die Muffe mit Mitteln (10a) zur translatorischen Feststellung versehen ist.

5. Maschine nach irgendeinem der Ansprüche 1 und 2, dadurch gekennzeichnet, daß die Mittel zur Feststellung der Füße (3, 4) zwei Versteifungsbeine (21, 22) umfassen, deren Enden jeweils an einem Fuß (3, 4) und einer Seite (7, 8) des Körpers (1) der Maschine angelenkt sind.

6. Maschine nach irgendeinem der Ansprüche 3 bis 5, dadurch gekennzeichnet, daß das oder die Versteifungsbeine entweder durch ein einstückiges Gestänge (12), welches mit lösbaren Befestigungsmitteln (13) an einem seiner Enden versehen ist, oder durch zusammenschiebbare Beine (17; 21, 22) oder durch Zirkelbeine (25), die mit Mitteln zur Blockierung einer Drehung des einen Schenkels (26) bezüglich des anderen (28) über die Streckstellung der Schenkel hinaus versehen sind, gebildet sind.

7. Maschine nach Anspruch 6, bei welcher die Versteifungsbeine durch zusammenschiebbare Beine gebildet sind, dadurch gekennzeichnet, daß die zusammenschiebbaren Beine Winden sind.

8. Maschine nach Anspruch 6, bei welcher die Versteifungsbeine zusammenschiebbare Beine sind, dadurch gekennzeichnet, daß die Beine mit Blockierungsmitteln (20; 23, 24) zur Blockierung in der ausgefahrenen Stellung versehen sind.

9. Maschine nach Anspruch 6, bei welcher das oder die Versteifungsbeine durch Zirkelbeine gebildet sind, dadurch gekennzeichnet, daß ferner ein Verriegelungselement (30) zur Verhinderung eines zufälligen Zusammenklappens der Zirkelbeine vorgesehen ist.

10. Maschine nach irgendeinem der Ansprüche 1 und 2, dadurch gekennzeichnet, daß die Mittel zur Feststellung der Füße (3, 4) an wenigstens einer Anlenkung eines jeden Fußes (3, 4) am Körper (1) der Maschine einen von einem am Körper (1) angelenkten Betätigungshebel (32) getragenen Vorsprung (31) aufweisen, wobei dieser Vorsprung für ein Zusammenwirken mit Öffnungen (36, 37) bestimmt ist, die in das entsprechende Ende eines jeden Fußes (3, 4), das in den Körper eindringt, eingelassen sind, wobei die Lagen der Öffnungen (36, 37) Winkellagen entsprechen, die jeder Fuß in der ausgeklappten bzw. zusammengeklappten Stellung des Gestells einnehmen muß.

**Claims**

1. A machine, in particular a machine-tool, comprising a support forming a work table, containing an electric driving motor and a machining unit associated with said motor and foldable feet means, characterised in that the feet means comprises two foldable feet (3, 4) in the shape of flattened bow-shaped structures each pivotally mounted by their ends on two ends (7, 8) of the support (1), the flattened portion (5, 6) of each foot forming a ground bearing region, the dimensions and the shapes of said bow-shaped structures being such that a part of the support (1) is capable of passing therethrough upon relative angular displacements of the support (1) and the feet (3, 4) and the feet are capable of passing one in the other in the course of said displacements, said feet means further comprising means (9, 12; 9, 17; 21, 22; 9, 25, 30; 32) for immobilising the feet in the opened-out position.

2. A machine according to claim 1, characterised in that the support (1) has a parallelepipedic shape and said feet (3, 4) are pivotally mounted on two opposed lateral sides (7, 8) of said body, the ends of said feet being engaged in corresponding apertures formed in said sides.

3. A machine according to either of the claims 1 and 2, characterised in that said means for immobilising the feet (3, 4) comprise a diagonal cross-member (9) pivotally mounted at each of its ends on one end of a rectilinear flattened portion (5, 6) of each feet (3, 4) and a reinforcing strut (12; 17; 28) connecting one of the feet (3, 4) to a point of the body (1) of the machine which is located on a side of said body opposed to said foot (3, 4).

4. A machine according to claim 3, characterised in that said diagonal cross-member is pivotally mounted on the rectilinear portion (6) of one of the feet (4) by means of a sleeve (10) slidably mounted on said rectilinear portion between two abutments (11), said sleeve being provided with means (10a) for immobilising it in translation.

5. A machine according to either one of the claims 1 and 2, characterised in that said means for immobilising the feet (3, 4) comprise two reinforcing struts (21, 22), the ends of which are respectively pivotally mounted on a foot (3, 4) and a side (7, 8) of the body (1) of the machine.

6. A machine according to any one of the claims 3 to 5, characterised in that the reinforcing strut or struts are constituted either by rods (12) in a single piece provided with releasable fixing means (13) at one of their ends, or by telescopic struts (17; 21, 22), or by compass structures (25) provided with means for locking a branch (26) against rotation relative to the other branch (28) beyond the alignment of said branches.

7. A machine according to claim 6, wherein the reinforcing struts are constituted by telescopic struts, characterised in that the telescopic struts are cylinder devices.

8. A machine according to claim 6, wherein the reinforcing struts are telescopic struts, characterised in that said struts are provided with means (20; 23, 24) for locking them in the opened-out position.

9. A machine according to claim 6, wherein the reinforcing strut or struts are constituted by compass structures, characterised in that it further comprises locking means (30) for preventing the accidental folding up of the compass structure.

10. A machine according to either one of the claims 1 and 2, characterised in that said means for immobilising the feet (3, 4) comprise, in the region of at least one pivotal mounting of each foot (3, 4) on the body (1) of the machine, a pin (31) carried by an actuating lever (32) pivotally mounted on the body (1), said pin being adapted to cooperate with orifices (36, 37) formed in the corresponding end of each foot (3, 4) which extends into the body, the positions of said orifices (36, 37) corresponding to the angular positions that each foot must occupy in the opened-out position and closed up position of the feet means respectively.

FIG.1

FIG.2

FIG.3A  FIG.3B  FIG.3C  FIG.3D  FIG.3E

FIG.4  FIG.5  FIG.6  FIG.7